# EUROPÄISCHE PATENTANMELDUNG

(11) **EP 4 576 480 A1**
(43) Veröffentlichungstag der Anmeldung: **25.06.2025**
(21) Anmeldenummer: 24203687.9
(22) Anmeldetag: 30.09.2024
(51) Int. Cl.: H02J 3/24, H02J 3/38, H02J 3/46

(54) **WECHSELRICHTER UND VERFAHREN FÜR EINEN WECHSELRICHTER**

(30) Priorität: 20.12.2023 DE 102023136136
(71) Anmelder: Westnetz GmbH, 44139 Dortmund (DE)
(72) Erfinder: Wippenbeck, Tilmann, 52399 Merzenich (DE)
(74) Vertreter: Bals & Vogel Patentanwälte PartGmbB

(57) **Zusammenfassung**

Die Erfindung betrifft ein Verfahren zum Betreiben, insbesondere zum Steuern und/oder Regeln, eines Wechselrichters (100), welcher insbesondere mit einer Netzarchitektur (200) und einem Energielieferanten (300) eines Netzsystems (1000) verbindbar ist, aufweisend
- Messen (110), durch einen Sensor (10) von einem Messwert einer injizierten Wirkleistung (p_mess), welche spezifisch ist für eine von dem Wechselrichter (100), insbesondere an die Netzarchitektur (200), injizierte Wirkleistung,
- Übertragen (120) des Messwerts der injizierten Wirkleistung (p_mess) von dem Sensor (10) an die Steuereinheit (ECU),
- Empfangen (130), durch die Steuereinheit (ECU), von einem Leistungssollwert (p_ref), welcher insbesondere von dem Energielieferanten (300) an den Wechselrichter (100) vorgegeben wird,
- Ermitteln (140), durch die Steuereinheit (ECU), einer ersten Stellgröße (SG1) in Abhängigkeit von dem Messwert der injizierten Wirkleistung (p_mess) und dem Leistungssollwert (p_ref), insbesondere zum Einstellen des Wechselrichters (100) [auf eine Zielgröße, umfassend Sollfrequenz, Sollphase, Leistungssollwert],
- Ermitteln (150), durch die Steuereinheit (ECU), einer zweiten Stellgröße (SG2) in Abhängigkeit von dem Messwert der injizierten Wirkleistung (p_mess) und zumindest eines Grenzwerts,
- Ermitteln (160), durch die Steuereinheit (ECU), einer dritten Stellgröße (SG3) in Abhängigkeit von der ersten Stellgröße (SG1) und der zweiten Stellgröße (SG2),
- Ansteuern (170), durch die Steuereinheit (ECU), des Wechselrichters (100) in Abhängigkeit von der dritten Stellgröße (SG3), insbesondere um in Abhängigkeit von der dritten Stellgröße (SG3) eine finale injizierte Wirkleistung durch den Wechselrichter (100) auszugeben, wobei vorzugsweise eine Stabilität und/oder Gesamtleistung der Netzarchitektur (200) verbessert wird.

## Beschreibung

Die Erfindung betrifft ein Verfahren mit den Merkmalen des unabhängigen Verfahrensanspruchs, einen Wechselrichter mit den Merkmalen des unabhängigen Patentanspruchs betreffend einen Wechselrichter, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit sowie ein Netzsystem mit den Merkmalen des unabhängigen Patentanspruchs betreffend ein Netzsystem.

Wechselrichter werden zur Ankopplung von elektrischen Erzeugungseinheiten, Speichern oder Lasten an eine (elektrische) Netzarchitektur eingesetzt. Beispielsweise kann ein Solarkraftwerk oder ein Windkraftwerk Gleichstrom im Megawattbereich liefern. Ein Wechselrichter kann dazu eingerichtet sein, diesen in Wechselspannung zu wandeln, z. B. bei einer Frequenz von 50 Hz. Auch kann ein dreiphasiges Spannungssystem (Drehstromsystem) erzeugt werden. Eine geeignete netzbildende Regelung des Wechselrichters kann aus Sicht der Netzarchitektur, bevorzugt ein Klemmenverhalten äquivalent zu einer Spannungsquelle (insbesondere "netzbildend"), hinter einer Impedanz erzeugen. Eine Untermenge dieser netzbildenden Regelungen besitzt die Fähigkeit zum Parallelbetrieb mit weiteren Netzbildnern oder dem elektrischen Netz allgemein. Darunter existiert eine Klasse von Regelungen, welche die Schwingungsgleichung elektrischer rotierender Maschinen nachbilden. Konventionelle Großkraftwerke mit trägen Synchrongeneratoren sorgen bzw. sorgten bisher für Stabilität im Stromnetz. Beispielsweise können diese Synchrongeneratoren (intrinsisch) aufgrund der Trägheit ihrer rotierenden Massen, kurzfristige Ausfälle, Spannungseinbrüche und dergleichen kompensieren. Da diese Großkraftwerke bzw. Synchrongeneratoren (schrittweise) seltener eingesetzt werden, insbesondere aufgrund von steigendem Anteil an Solar und/oder Windenergie, fällt diese stabilisierende Eigenschaft, zumindest teilweise, weg.

Der bestehende Stand der Technik weist dabei Nachteile auf. So stellen bekannte Wechselrichter zwar eine injizierte Wirkleistung an eine Netzarchitektur, wie z. B. ein Unterverteilnetz, bereit. Eine netzdienliche Regelung, z. B. um ähnlich zu den Großkraftwerken die Stabilität und/oder Synchronität aufrechtzuerhalten, weisen diese jedoch nicht oder nur in verbesserungswürdigen Maß auf. Es gibt netzbildende Wechselrichter, die ihre Leistung begrenzen können, dabei aber nur einen Selbstschutz realisieren und/oder keine Netzdienlichkeit, insbesondere keinen Erhalt der Synchronität, gewährleisten können. Wie oben beschrieben können sich entsprechende (Leistungs-) Wechselrichter im Wesentlichen wie eine Spannungsquelle hinter einer Impedanz verhalten. Entsprechend kann es sein, dass diese Wechselrichter auch bei Störungen (nachteilig) wie eine derartige Spannungsquelle reagieren. Bekannte Wechselrichter können zudem eine unzureichende Begrenzung des (maximalen) Strom- und/oder Wirkleistungsflusses aufweisen. Dadurch können Schäden an den Halbleiterbauteilen (des Wechselrichters) entstehen, was insbesondere erhöhte Wartung und/oder Kosten erfordert. Dabei können Überlasten auftreten, ohne, dass die Klemmenspannung signifikant einbricht, weshalb insbesondere (für diese Fälle) Überstrombegrenzungen nicht wirksam sind. Durch den Energielieferanten (z. B. Windkraftwerk) bzw. Primärprozess kann eine technische Mindestwirkleistung existieren, die für den Betrieb der Anlage nicht unterschritten werden darf. Für bidirektionale Primärprozesse (z.B. elektrische Batteriespeicher) kann eine richtungsunabhängige Begrenzung des maximalen Strom- und Wirkleistungsflusses notwendig sein.

Es ist daher eine Aufgabe der vorliegenden Erfindung, wenigstens einen der voranstehend beschriebenen Nachteile zumindest teilweise zu überwinden. Insbesondere ist es Aufgabe der Erfindung eine Verbesserung der Netzdienlichkeit und/oder Synchronität, bereitzustellen, so dass insbesondere eine injizierte Wirkleistung, bzw. eine diese erzeugende (Wechsel-) Spannung, möglichst frequenzsynchron und/oder phasensynchron (z. B. an eine Netzarchitektur) bereitgestellt werden kann. Weiterhin kann es eine Aufgabe sein, eine verbesserte Stabilität und/oder Robustheit bereitzustellen, insbesondere gegenüber Störungen, Spannungsänderungen, Spannungseinbrüchen, überhöhter Last, Schwingungsverhalten, Verlust der Synchronität, Winkelsprüngen, Winkelüberhöhungen, und/oder Frequenzstörungen (wie z. B. Frequenzgradienten). Dies kann durch eine Aufwindung (Windup) des, insbesondere in der hier betrachteten Klasse von netzbildenden Wechselrichterregelungen enthaltenen, ersten Integrators erklärt werden, welcher insbesondere zur Implementierung der Schwingungsgleichung aufgrund der Stellgrößenbeschränkung als Folge der Art und Weise der Umsetzung der Leistungsbegrenzung mit Angriffspunkt hinter diesem Integrator verwendet wird. Weiterhin kann es eine Aufgabe sein, die Sicherheit zu erhöhen. Insbesondere kann es dabei eine Aufgabe sein, eine Überlast und/oder Unterlast, insbesondere des Wechselrichters, zu reduzieren oder zu verhindern. Weiterhin kann es eine Aufgabe sein, eine verbesserte Parallelbetriebsfähigkeit und/oder Nachbildung der Schwingungsgleichung elektrischer Maschinen bereitzustellen. Zudem kann es eine Aufgabe sein, Ausfallzeiten, Wartung und/oder Kosten zu reduzieren.

Die voranstehende Aufgabe wird gelöst durch ein Verfahren mit den Merkmalen des unabhängigen Verfahrensanspruchs, einen Wechselrichter mit den Merkmalen des unabhängigen Patentanspruchs betreffend einen Wechselrichter, ein Computerprogrammprodukt mit den Merkmalen des unabhängigen Patentanspruchs betreffend ein Computerprogrammprodukt, einen computerlesbaren Datenträger mit den Merkmalen des unabhängigen Patentanspruchs betreffend einen computerlesbaren Datenträger, eine Steuereinheit mit den Merkmalen des unabhängigen Patentanspruchs betreffend eine Steuereinheit sowie ein Netzsystem mit den Merkmalen des unabhängigen Patentanspruchs betreffend ein Netzsystem. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Wechselrichter und/oder im Zusammenhang mit dem erfindungsgemäßen Computerprogrammprodukt und/oder im Zusammenhang mit dem erfindungsgemäßen computerlesbaren Datenträger und/oder im Zusammenhang mit der erfindungsgemäßen Steuereinheit und/oder im Zusammenhang mit dem erfindungsgemäßen Netzsystem und jeweils umgekehrt, so dass bezüglich der Offenbarung zu den einzelnen Erfindungsaspekten stets wechselseitig Bezug genommen wird bzw. werden kann. Insbesondere gelten Vorteile, die im Rahmen des ersten, zweiten, dritten, vierten, fünften und/oder sechsten Aspekts beschrieben werden, auch jeweils für den ersten, zweiten, dritten, vierten, fünften und/oder sechsten Aspekt.

Die obenstehende Aufgabe wird gemäß einem ersten Aspekt gelöst durch ein Verfahren zum Betreiben, insbesondere zum Steuern und/oder Regeln, eines Wechselrichters, welcher insbesondere mit einer Netzarchitektur und einem Energielieferanten eines Netzsystems verbindbar ist bzw. verbunden ist, aufweisend
- Messen, durch einen Sensor, von einem Messwert einer injizierten Wirkleistung, welcher spezifisch ist für eine von dem Wechselrichter, insbesondere an die Netzarchitektur, injizierte Wirkleistung,
- Übertragen des Messwerts der injizierten Wirkleistung von dem Sensor an die Steuereinheit, insbesondere über eine Datenverbindung,
- Empfangen, durch die Steuereinheit, von einem Leistungssollwert, welcher insbesondere von dem Energielieferanten an den Wechselrichter vorgegeben wird,
- Ermitteln, durch die Steuereinheit, einer ersten Stellgröße in Abhängigkeit von dem Messwert der injizierten Wirkleistung und dem Leistungssollwert, insbesondere zum Einstellen des Wechselrichters, z. B. auf eine Zielgröße, umfassend Sollfrequenz, Sollphase, und/oder Leistungssollwert (für eine injizierte Wirkleistung),
- Ermitteln, durch die Steuereinheit, einer zweiten Stellgröße in Abhängigkeit von dem Messwert der injizierten Wirkleistung und zumindest eines Grenzwerts,
- Ermitteln, durch die Steuereinheit, einer dritten Stellgröße in Abhängigkeit von der ersten Stellgröße und der zweiten Stellgröße,
- Ansteuern, durch die Steuereinheit, des Wechselrichters in Abhängigkeit von der dritten Stellgröße, insbesondere um in Abhängigkeit von der dritten Stellgröße eine finale injizierte Wirkleistung durch den Wechselrichter auszugeben, wobei vorzugsweise eine Stabilität und/oder Gesamtleistung der Netzarchitektur verbessert wird, und wodurch vorzugsweise die injizierte Wirkleistung begrenzt wird.

Dabei kann ein Netzsystem einen Wechselrichter, eine Netzarchitektur und/oder einen Energielieferanten aufweisen (siehe unten).

Dabei kann der Wechselrichter für Leistungen im Megawattbereich eingerichtet sein. Beispielsweise ist ein Wechselrichter für ein Windkraftwerk denkbar, welcher von dem Windkraftwerk produzierten Gleichstrom in Wechselstrom (z. B. mit 50 Hz) und/oder Drehstrom umwandelt. Es kann sich demnach um einen Leistungswechselrichter handeln. Dabei kann der Wechselrichter eine Steuereinheit aufweisen, welche ein Betreiben, insbesondere ein (An-) Steuern und/oder Regeln des Wechselrichters durchführt. Hierfür kann ein Datenaustausch zwischen der Steuereinheit und dem Wechselrichter (insbesondere dem Transformator), z. B. über eine Datenverbindung vorgesehen sein.

Das Verfahren kann dabei computer-implementiert sein. Vorzugsweise werden die Verfahrensschritte in der dargestellten Reihenfolge durchgeführt. Es kann vorgesehen sein, die Reihenfolge zu ändern, insbesondere sofern technisch sinnvoll. Weiterhin kann es vorgesehen sein, das Verfahren wiederholt und/oder kontinuierlich durchzuführen. Vorzugsweise kann das Verfahren, die Steuereinheit und/oder der Wechselrichter dazu eingerichtet sein, das Verhalten einer (elektrischen) Synchronmaschine zu emulieren (bzw. zu simulieren) und/oder eine Nachbildung der Schwingungsgleichung(en) einer elektrischen Maschine bereitzustellen. Dies kann durch ein Berechnen, insbesondere durch die Steuereinheit, von einer (virtuellen) Rotorfrequenz(referenz) und/oder einer Phasenwinkel(referenz) erfolgen, beispielsweise durch einen oder zwei Integratoren. Dadurch kann eine besonders hohe Stabilität und/oder Synchronität bereitgestellt werden. Das Verfahren kann von der Steuereinheit, insbesondere von einem (inneren) Regelkreis der Steuereinheit, durchgeführt werden. Das Verfahren bzw. der Regelkreis können dabei (zumindest teilweise) in Software (insbesondere nicht-physisch) implementiert sein.

Dabei kann, insbesondere anfänglich, das Verfahren aufweisen: Ansteuern, durch eine Steuereinheit, des Wechselrichters zum Erzeugen einer, insbesondere in das Netzsystem, injizierten Wirkleistung durch den Wechselrichter. Demnach kann es bereits zu Beginn vorgesehen sein, dass der Wechselrichter eine injizierte Wirkleistung bereitstellt. Mit anderen Worten kann das Verfahren während eines Betreibens des Wechselrichters angewendet werden.

Das Messen, durch einen Sensor von einem Messwert einer injizierten Wirkleistung, welcher spezifisch ist für eine von dem Wechselrichter, insbesondere an die Netzarchitektur, injizierte Wirkleistung, kann dabei von einem Sensor des Wechselrichters, der Netzarchitektur und/oder einem zwischen diesen angeordneten Sensor erfolgen. Dazu kann ein Ansteuern des Sensors durch die Steuereinheit erfolgen, wodurch insbesondere der Sensor dazu veranlasst werden kann, ein (wiederholtes) Messen der injizierten Wirkleistung durchzuführen, um insbesondere einen Messwert der injizierten Wirkleistung zu erhalten. Dabei kann der Sensor dazu eingerichtet sein eine Leistung, eine Spannung und/oder einen Strom zu messen. Dabei kann beispielsweise die Leistung, insbesondere durch die Steuereinheit, in Abhängigkeit von einer Spannung und einem Strom berechnet werden.

Das Übertragen des Messwerts der injizierten Wirkleistung von dem Sensor kann über eine Datenverbindung mit der Steuereinheit erfolgen.

Das Empfangen von einem Leistungssollwert durch die Steuereinheit kann über eine Datenverbindung zwischen der Steuereinheit und einem, insbesondere mit dem Wechselrichter elektrisch verbindbaren, Energielieferanten (z. B. einem Windkraftwerk) erfolgen. Dabei kann der Leistungssollwert beispielsweise eine (momentane oder zukünftige) Leistung des Energielieferanten umfassen. Es kann vorgesehen sein, dass der Energielieferant eine weitere (eigene bzw. separate) Steuereinheit aufweist, welche den Leistungssollwert (an die Steuereinheit) bereitstellt. Dabei kann die weitere Steuereinheit für ein Betreiben des Energielieferanten eingerichtet sein.

Dabei können die dritte, vierte und/oder fünfte Stellgröße (siehe unten) dazu eingerichtet sein, die Netzdienlichkeit zu verbessern, ein Übersteuern des Wechselrichters zu verhindern, die Stabilität und/oder Gesamtleistung der Netzarchitektur und/oder des Netzsystems zu optimieren und/oder eine (Wirk-) Leistung des Wechselrichters zu begrenzen. Besonders bevorzugt kann der Wechselrichter durch ein Ansteuern (kurzfristige) Ausfälle, Störungen, Spannungs- und/oder Stromänderungen kompensieren. Vorzugsweise kann dabei der Wechselrichter, insbesondere durch Steuern und/oder Regeln durch die Steuereinheit, zumindest teilweise das Verhalten einer (elektrischen) Synchronmaschine simulieren, emulieren und/oder vorgeben. Dadurch kann das Netzsystem und/oder die Netzarchitektur, insbesondere bei Störungen, stabilisiert werden, insbesondere ähnlich wie dies bei (elektrischen) Synchronmaschinen bzw. durch Grundlastkraftwerke bereitgestellt werden würde. Bevorzugt kann der Wechselrichter dabei im stationären, nicht-stationären Zustand und/oder im Fehlerfall betrieben werden, insbesondere vorteilhaft angesteuert werden. Der Wechselrichter kann dazu eingerichtet sein eine Trägheitsunterstützung und/oder verbesserte Dämpfung (z. B. durch einen ersten, zweiten und/oder dritten Kopplungspfad), insbesondere unter transienten Bedingungen, bereitzustellen, vorzugsweise durch ein Ansteuern. Der Wechselrichter kann dazu eingerichtet sein, ohne (detaillierte) Informationen und/oder Kommunikation mit einer Netzarchitektur ein Ansteuern zu ermöglichen, welches sich vorteilhafterweise dennoch optimierend auf die Netzarchitektur auswirkt, beispielsweise durch Verbesserung der Stabilität. Der Wechselrichter, die Steuereinheit und/oder das Verfahren können dazu eingerichtet sein, (vergleichsweise) schnell und/oder mit niedriger Latenz ein Ansteuern zu ermöglichen, um vorteilhafterweise eine (vergleichsweise schnelle) Reaktion auf Änderungen (wie z.B. Störungen) der oder in der Netzarchitektur bereitzustellen.

Im Rahmen der Erfindung kann es von Vorteil sein, dass Ermitteln, durch die Steuereinheit, einer ersten Stellgröße in Abhängigkeit von dem Messwert der injizierten Wirkleistung und dem Leistungssollwert, ein Berechnen einer Differenz zwischen dem Messwert der injizierten Wirkleistung und dem Leistungssollwert umfasst, um die erste Stellgröße zu erhalten, wobei insbesondere die erste Stellgröße eine Leistungsdifferenz aufweist.

Der Messwert der injizierten Wirkleistung und/oder der Leistungssollwert können dabei eine (zeitlich) gemittelte Leistung aufweisen. Diese können beispielsweise (jeweils) über eine Spannung und/oder einen Strom ermittelt werden. Vorzugsweise umfasst bzw. basiert der Leistungssollwert auf einem Gleichstrom und/oder einer Gleichspannung. Vorzugsweise umfasst bzw. basiert die injizierte Wirkleistung und/oder der Messwert der injizierten Wirkleistung auf einem Wechselstrom und/oder einer Wechselspannung, und kann insbesondere aus diesen berechnet werden.

Das Berechnen kann durch ein erstes Verrechnungsglied, insbesondere einen Komparator, durchgeführt werden. Dazu kann die Steuereinheit, insbesondere der Regelkreis, ein erstes Verrechnungsglied, insbesondere einen Komparator, aufweisen, welcher insbesondere den Messwert der injizierten Wirkleistung und den Leistungssollwert als Eingangsgrößen erhält. Durch Berechnen einer Differenz kann die erste Stellgröße ermittelt werden. Diese kann entsprechend eine Leistungsdifferenz aufweisen.

Die Steuereinheit, insbesondere ein (innerer) Regelkreis der Steuereinheit, kann dabei zumindest eines der folgenden Merkmale aufweisen:
- ein erstes Verrechnungsglied, insbesondere einen Komparator,
- einen frequenzbildenden Integrator, welcher insbesondere mit dem ersten Verrechnungsglied (bzw. dem zweiten und/oder dritten Verrechnungsglied) verbunden ist, vorzugsweise eingerichtet zur Aufnahme einer ersten, zweiten und/oder dritten Stellgröße, wobei insbesondere der frequenzbildende Integrator einen Faktor aufweisen kann, der vorzugsweise dazu eingerichtet ist einen Beitrag zur (fiktiven) Massenträgheit zu bestimmen, wobei beispielsweise der Faktor gleich 1/Td sein kann, wobei Td eine Anlaufzeitkonstante umfassen kann,
- ein zweites Verrechnungsglied (insbesondere verbunden mit dem ersten und dritten Verrechnungsglied) zum Bereitstellen einer ersten Verrechnungsgröße in Abhängigkeit von der ersten Stellgröße und einer ersten Kopplungsgröße eines ersten Kopplungspfads (welcher insbesondere angeordnet ist zwischen dem Ausgang des frequenzbildenden Integrators und dem zweiten Verrechnungsglied),
- ein drittes Verrechnungsglied (insbesondere verbunden mit dem zweiten Verrechnungsglied und dem frequenzbildenden Integrator) zum Bereitstellen der dritten Stellgröße (an den frequenzbildenden Integrator) in Abhängigkeit von der ersten Stellgröße, insbesondere der ersten Verrechnungsgröße, und der zweiten Stellgröße,
- einen phasenwinkelbildenden Integrator, welcher insbesondere mit dem frequenzbildenden Integrator, insbesondere dem (dazwischenliegenden) vierten Stellglied und dem fünften Stellglied, verbunden ist, vorzugsweise eingerichtet zur Aufnahme einer vierten Stellgröße,
- ein viertes Verrechnungsglied (insbesondere verbunden mit dem frequenzbildenden und phasenwinkelbildenden Integrator) zum Bereitstellen einer zweiten Verrechnungsgröße in Abhängigkeit von der vierten Stellgröße und einer zweiten Kopplungsgröße eines zweiten Kopplungspfads (welcher insbesondere angeordnet ist zwischen dem Ausgang des zweiten Verrechnungsglieds und dem vierten Verrechnungsglied),einen Begrenzer, welcher insbesondere ein Ermitteln einer zweiten Stellgröße in Abhängigkeit von dem Messwert der injizierten Wirkleistung und zumindest eines Grenzwerts durchführt und/oder eine (tatsächlich ausgegebene) injizierte Wirkleistung des Wechselrichters, insbesondere schnellstmöglich, begrenzt, während vorzugsweise gleichzeitig eine Realisierung der oben genannten Vorteile durchgeführt wird, insbesondere der Stabilisierung der Netzarchitektur, wobei insbesondere das Verfahren bzw. der Regelkreis die Wirkleistung begrenzt, aber dennoch mit den (unveränderten) Werten für ein Steuern und/oder Regeln (weiter-) rechnet, wodurch insbesondere die Netzstabilität verbessert werden kann, wobei der Begrenzer mit dem frequenzbildenden Integrator, insbesondere mit dem dritten Verrechnungsglied, verbunden sein kann um die zweite Stellgröße bereitzustellen,
- einen (ersten) Kopplungspfad, welcher insbesondere parallel und/oder rückwärts eine Ausgabe des frequenzbildenden Integrators wieder dem Eingang und/oder dem zweiten Verrechnungsglied zurückführt, und insbesondere die zweite Stellgröße beeinflusst,
- einen (zweiten) Kopplungspfad, welcher insbesondere parallel und/oder vorwärts die Eingabe des frequenzbildenden Integrators bzw. die zweite Stellgröße, und/oder die erste Verrechnungsgröße, dem Ausgang des frequenzbildenden Integrators bzw. der vierten Stellgröße und/oder dem vierten Verrechnungsglied, zuführt, und insbesondere die vierte Sollgröße beeinflusst,
- einen (dritten) Kopplungspfad, welcher insbesondere parallel und/oder vorwärts die Eingabe des phasenwinkelbildenden Integrators bzw. die vierte Stellgröße und/oder die zweite Verrechnungsgröße, dem Ausgang des phasenwinkelbildenden Integrators bzw. der fünften Stellgröße und/oder dem fünften Verrechnungsglied zuführt, und insbesondere die fünfte Sollgröße beeinflusst.

Dabei können die erste, zweite, und/oder dritte Verrechnungsgröße (jeweils) eine Stellgröße aufweisen. Dabei können das erste, zweite, dritte, vierten und/oder fünfte Verrechnungsglied (jeweils) dazu eingerichtet sein für ein (arithmetisches) Summieren und/oder Subtrahieren. Diese können (dadurch) die erste, zweite, und/oder dritte Verrechnungsgröße bereitstellen und/oder ermitteln.

Es kann dabei vorgesehen sein, dass die Steuereinheit bei Durchführung des Verfahrens, insbesondere der Regelkreis bzw. Begrenzer, eine gemessene injizierte Wirkleistung mit zumindest einem Grenzwert vergleicht, z. B. einem oberen Grenzwert für die injizierte Wirkleistung. Dadurch kann eine Abweichung bzw. eine (potentielle) Leistungsüberschreitung, welche z. B. den Wechselrichter beschädigen könnte, erkannt werden. Dadurch kann die Steuereinheit bzw. der Begrenzer eingreifen, beispielsweise indem das Steuern und/oder Regeln z. B. über einen PID-Regler (der Steuereinheit), beeinflusst wird und/oder die Leistung begrenzt wird. Beispielsweise kann durch die Steuereinheit, z. B am Ausgang des Begrenzers, eine zweite Stellgröße bereitgestellt werden. Eine dritte Stellgröße kann in Abhängigkeit von der zweiten Stellgröße und der ersten Stellgröße erzeugt werden. Dabei kann die zweite Stellgröße (als Summand) auf die erste Stellgröße aufsummiert werden. Dadurch kann die Frequenz und/oder die Phase des frequenzbildenden und/oder phasenwinkelbildenden Integrators verändert werden. Dadurch kann insbesondere die Phase der (inneren) Spannungsquelle, welche insbesondere der Wechselrichter (aus Sicht der Netzarchitektur) darstellt, verändert werden. Dadurch kann eine (fünfte) Stellgröße erzeugt werden, welche vorzugsweise zum Steuern und/oder Regeln des Wechselrichters verwendet werden kann. Durch den Begrenzer und/oder das Verfahren kann eine (schnellere) Reaktion auf Veränderungen wie z. B. Störungen der Netzarchitektur erfolgen. Insbesondere kann ein Aufwinden (z. B: Wind-up) des frequenzbildenden und/oder phasenwinkelbildenden Integrators verringert und/oder verhindert werden. Mit anderen Worten kann es "vorgegaukelt" werden, dass mehr injizierte Wirkleistung injiziert wird, als tatsächlich der Fall, wobei vorzugsweise gleichzeitig ein Ansteuern bzw. ein Steuern und/oder Regeln an die (tatsächlich) injizierte Wirkleistung angelehnt ist.

Dabei kann der bzw. können die Kopplungspfad(e) eine (zusätzliche) Dämpfung des Verfahrens bzw. des Regelkreises und/oder der Signale aufweisen.

Im Rahmen der Erfindung ist es denkbar, dass der zumindest eine Grenzwert spezifisch ist für den Wechselrichter, eine mit dem Wechselrichter verbindbare Netzarchitektur, und/oder einen mit dem Wechselrichter verbindbaren Energielieferanten.

Dabei kann der zumindest eine Grenzwert in der Steuereinheit, insbesondere einer Speichereinheit der Steuereinheit, gespeichert sein, beispielsweise im Rahmen einer Installation des Wechselrichters, des Energielieferanten und/oder der Netzarchitektur. Alternativ oder zusätzlich kann der zumindest eine Grenzwert von dem Energielieferanten und/oder der Netzarchitektur an den Wechselrichter, insbesondere die Steuereinheit, übermittelt werden, beispielsweise über eine Datenverbindung.

Es kann im Rahmen der Erfindung vorgesehen sein, dass das Ermitteln, durch die Steuereinheit, einer zweiten Stellgröße in Abhängigkeit von dem Messwert der injizierten Wirkleistung und zumindest eines Grenzwerts, insbesondere des Wechselrichters, der Netzarchitektur, und/oder des Energielieferanten, ein Vergleichen des Messwerts der injizierten Wirkleistung und des zumindest einen Grenzwerts umfasst, wobei insbesondere der zumindest eine Grenzwert zumindest eines der folgenden Merkmale aufweist:
- ein unterer Grenzwert für die injizierte Wirkleistung, welcher insbesondere spezifisch ist für den Wechselrichter (z. B. für effizientes Umwandeln) und/oder einen mit dem Wechselrichter verbundenen Energielieferant (z. B: minimal mögliche Leistung),
- ein oberer Grenzwert für die injizierte Wirkleistung, welcher insbesondere spezifisch ist für den Wechselrichter (z. B. für Leistungselektronik), eine mit dem Wechselrichter verbundene Netzstruktur (z. B: maximal verwendbare bzw. gewünschte Leistung), und/oder einen mit dem Wechselrichter verbundenen Energielieferanten (z. B: maximal mögliche Leistung),
- ein unterer Grenzwert für eine Frequenz der injizierten Wirkleistung, insbesondere für eine Frequenz eines Wechselstroms und/oder einer Wechselspannung einer inneren Spannungsquelle des Wechselrichters,
- ein oberer Grenzwert für die Frequenz der injizierten Wirkleistung, insbesondere für eine Frequenz eines Wechselstroms und/oder einer Wechselspannung einer inneren Spannungsquelle des Wechselrichters,
- ein unterer Grenzwert für einen Phasenwinkel der injizierten Wirkleistung, insbesondere für einen Phasenwinkel eines Wechselstroms und/oder einer Wechselspannung einer inneren Spannungsquelle des Wechselrichters,
- ein oberer Grenzwert für den Phasenwinkel der injizierten Wirkleistung, insbesondere für einen Phasenwinkel eines Wechselstroms und/oder einer Wechselspannung einer inneren Spannungsquelle des Wechselrichters.

Dabei kann es vorgesehen sein, dass der Wechselrichter eine, insbesondere innere, Spannungsquelle aufweist, welche eine Wechselspannung und/oder einen Wechselstrom bereitstellt, vorzugsweise aufweisend eine Frequenz und/oder einen Phasenwinkel. Bevorzugt ist der Wechselrichter und/oder die Steuereinheit (durch Ansteuern des Wechselrichters) dazu eingerichtet, eine (finale) injizierte Wirkleistung auszugeben. Dabei kann vorzugsweise keine oder nur (vergleichsweise) geringe Differenz der Frequenz und/oder des Phasenwinkels (der inneren Spannungsquelle) zu der Frequenz und/oder dem Phasenwinkel der Spannung und/oder des Stroms der (äußeren) Netzarchitektur eingestellt und/oder erzielt werden. Mit anderen Worten kann dadurch eine (verbesserte) Synchronität erzielt werden.

Es ist ferner denkbar, dass das Ermitteln, durch die Steuereinheit, einer dritten Stellgröße in Abhängigkeit von der ersten Stellgröße und der zweiten Stellgröße, ein Summieren, insbesondere ein arithmetisches Summieren, der ersten Stellgröße und der zweiten Stellgröße umfasst, um die dritte Stellgröße zu erhalten.

Dabei kann die dritte Stellgröße durch die Steuereinheit, insbesondere einen (inneren) Regelkreis der Steuereinheit, ermittelt werden. Die erste Stellgröße kann durch ein erstes Verrechnungsglied, insbesondere einen Komparator, ermittelt werden (siehe oben).

Auch ist es denkbar, dass das Ansteuern, durch die Steuereinheit, des Wechselrichters in Abhängigkeit von der dritten Stellgröße zumindest eines, vorzugsweise alle, der folgenden Merkmale aufweist:
- ein Bereitstellen der dritten Stellgröße an einen frequenzbildenden Integrator, insbesondere um eine vierte Stellgröße zu erhalten, welche vorzugsweise repräsentativ ist für eine Frequenz, insbesondere einer Spannung und/oder eines Stroms, der injizierten Wirkleistung, wodurch vorzugsweise eine (virtuelle) Rotorfrequenz(referenz) gebildet wird beispielsweise für das Emulieren einer Synchronmaschine,
- ein Bereitstellen der dritten Stellgröße, insbesondere der vierten Stellgröße, an einen phasenwinkelbildenden Integrator, insbesondere um eine fünfte Stellgröße zu erhalten, welche vorzugsweise repräsentativ ist für einen Phasenwinkel, insbesondere einer Spannung und/oder eines Stroms, einer inneren Spannungsquelle des Wechselrichters, wodurch vorzugsweise eine (virtuelle) Phasenwinkel (referenz) gebildet wird beispielsweise für das Emulieren einer Synchronmaschine,
- Betreiben, insbesondere Steuern und/oder Regeln des Wechselrichters, durch die Steuereinheit, in Abhängigkeit von der dritten Stellgröße, vierten Stellgröße und/oder fünften Stellgröße, wobei insbesondere in Abhängigkeit von der dritten Stellgröße, vierten Stellgröße und/oder fünften Stellgröße eine finale injizierte Wirkleistung durch den Wechselrichter ausgegeben wird, wobei vorzugsweise die finale injizierte Wirkleistung zumindest eines der folgenden Merkmale aufweist
   i. wobei die finale injizierte Wirkleistung, vorzugsweise (im Wesentlichen) dem Leistungssollwert entspricht,
   ii. wobei die finale injizierte Wirkleistung, vorzugsweise größer oder gleich einem unteren Grenzwert für die injizierte Wirkleistung ist, welcher insbesondere spezifisch ist für den Wechselrichter und/oder einen mit dem Wechselrichter verbundenen Energielieferant,
   iii. wobei die finale injizierte Wirkleistung, vorzugsweise kleiner oder gleich einem oberen Grenzwert für die injizierte Wirkleistung ist, welcher insbesondere spezifisch ist für den Wechselrichter, eine mit dem Wechselrichter verbundene Netzstruktur, und/oder einen mit dem Wechselrichter verbundenen Energielieferanten,
   iv. eine, insbesondere finale, Frequenz, welche vorzugsweise einer SollFrequenz entspricht, wobei insbesondere die Frequenz größer oder gleich einem unteren Grenzwert für eine Frequenz einer inneren Spannungsquelle des Wechselrichters ist und/oder kleiner oder gleich einem oberen Grenzwert für die Frequenz einer inneren Spannungsquelle des Wechselrichters ist, wodurch vorzugsweise eine Synchronität zu der Netzarchitektur bereitgestellt und/oder sichergestellt wird,
   v. einen finalen Phasenwinkel, welcher vorzugsweise einem Soll-Phasenwinkel entspricht wobei insbesondere der finale Phasenwinkel größer oder gleich einem unteren Grenzwert für einen Phasenwinkel einer inneren Spannungsquelle des Wechselrichters ist und/oder kleiner oder gleich einem oberen Grenzwert für den Phasenwinkel einer inneren Spannungsquelle des Wechselrichters ist, wodurch vorzugsweise eine Synchronität zu der Netzarchitektur bereitgestellt und/oder sichergestellt wird,
   vi. wobei die die finale injizierte Wirkleistung dazu eingerichtet ist, ein unerwünschtes Schwingungsverhalten und/oder einen zumindest teilweisen Verlust einer Synchronität, insbesondere einer mit dem Wechselrichter verbindbaren Netzarchitektur, zu verhindern.

Die obenstehende Aufgabe wird gemäß einem zweiten Aspekt gelöst durch einen erfindungsgemäßen Wechselrichter, insbesondere netzbildenden Wechselrichter, welcher vorzugsweise mit einer Netzarchitektur und einem Energielieferanten eines Netzsystems verbindbar, vorzugsweise verbunden, ist, aufweisend
- einen Wandler zum Transformieren einer an den Wechselrichter, insbesondere von dem Energielieferanten, bereitgestellten Primärleistung (welche z. B. dem Leistungssollwert entsprechen kann) in eine injizierte Wirkleistung, welche insbesondere von dem Wechselrichter an eine Netzarchitektur bereitgestellt wird,
- einen Sensor zum Erfassen eines (Ist-) Messwerts der injizierten Wirkleistung, welche spezifisch ist für die von dem Wechselrichter, insbesondere an die Netzarchitektur bereitgestellte, (aktuelle) injizierte Wirkleistung,
- eine Steuereinheit, welche das Verfahren gemäß dem ersten Aspekt implementiert.

Dabei kann das Transformieren einer an den Wechselrichter bereitgestellten Primärleistung in eine injizierte Wirkleistung, das Transformieren insbesondere einer ersten Spannung in eine zweite Spannung umfasst, wobei beispielsweise die erste Spannung eine Gleichspannung aufweist und die zweite Spannung eine Wechselspannung und/oder Dreiphasenwechselspannung aufweist.

Damit ergeben sich in Bezug auf einen erfindungsgemäßen Wechselrichter gemäß dem zweiten Aspekt die gleichen Vorteile, wie sie bereits in Bezug auf ein erfindungsgemäßes Verfahren gemäß dem ersten Aspekt beschrieben worden sind.

Im Rahmen der Erfindung kann es von Vorteil sein, dass der Wechselrichter für einen Parallelbetrieb mit zumindest einem weiteren Wechselrichter, und/oder für ein Nachbilden einer Schwingungsgleichung einer elektrischen Maschine eingerichtet ist.

Die obenstehende Aufgabe wird gemäß einem dritten Aspekt gelöst durch ein erfindungsgemäßes Computerprogrammprodukt, umfassend Befehle, die bei der Ausführung des Computerprogrammprodukts durch einen Computer diesen veranlassen, das Verfahren gemäß dem ersten Aspekt zu implementieren.

Damit ergeben sich in Bezug auf ein erfindungsgemäßes Computerprogrammprodukt gemäß dem dritten Aspekt die gleichen Vorteile, wie sie bereits in Bezug auf ein erfindungsgemäßes Verfahren gemäß dem ersten Aspekt und/oder einen erfindungsgemäßen Wechselrichter gemäß dem zweiten Aspekt beschrieben worden sind.

Die obenstehende Aufgabe wird gemäß einem vierten Aspekt gelöst durch einen erfindungsgemäßen computerlesbaren Datenträger, in welchem Befehle hinterlegt sind, die bei der Ausführung durch einen Computer diesen veranlassen, das Verfahren gemäß dem ersten Aspekt durchzuführen.

Damit ergeben sich in Bezug auf einen erfindungsgemäßen computerlesbaren Datenträger gemäß dem vierten Aspekt die gleichen Vorteile, wie sie bereits in Bezug auf ein erfindungsgemäßes Verfahren gemäß dem ersten Aspekt und/oder einen erfindungsgemäßen Wechselrichter gemäß dem zweiten Aspekt und/oder ein erfindungsgemäßes Computerprogrammprodukt gemäß dem dritten Aspekt beschrieben worden sind.

Die obenstehende Aufgabe wird gemäß einem fünften Aspekt gelöst durch eine erfindungsgemäße Steuereinheit, aufweisend eine Recheneinheit und eine Speichereinheit, in welcher Befehle hinterlegt sind, welche bei zumindest teilweiser Ausführung durch die Recheneinheit ein Verfahren gemäß dem ersten Aspekt durchführt.

Damit ergeben sich in Bezug auf eine erfindungsgemäße Steuereinheit gemäß dem fünften Aspekt die gleichen Vorteile, wie sie bereits in Bezug auf ein erfindungsgemäßes Verfahren gemäß dem ersten Aspekt und/oder einen erfindungsgemäßen Wechselrichter gemäß dem zweiten Aspekt und/oder ein erfindungsgemäßes Computerprogrammprodukt gemäß dem dritten Aspekt und/oder einen erfindungsgemäßen computerlesbaren Datenträger gemäß dem vierten Aspekt beschrieben worden sind.

Die obenstehende Aufgabe wird gemäß einem sechsten Aspekt gelöst durch ein erfindungsgemäßes Netzsystem aufweisend
- einen Wechselrichter gemäß dem zweiten Aspekt,
- eine Netzarchitektur, welche mit dem Wechselrichter verbindbar, insbesondere verbunden, ist, wobei beispielsweise die Netzarchitektur ein Verteilnetz, ein Übertragungsnetz, und/oder einen ersten Energiespeicher (z. B. Akkumulator) aufweist,
- einen Energielieferanten welcher mit dem Wechselrichter verbindbar, insbesondere verbunden, ist, und eine Primärleistung an den Wechselrichter bereitstellt, wobei beispielsweise der Energielieferant einen Energiegenerator (z. B. Windkraftwerk) und/oder einen zweiten Energiespeicher (z. B. Akkumulator) aufweist,
- wobei der Wechselrichter, insbesondere durch Implementieren des Verfahrens gemäß dem ersten Aspekt, eine (finale) injizierte Wirkleistung an die Netzarchitektur bereitstellt, wobei vorzugsweise eine Stabilität und/oder Gesamtleistung der Netzarchitektur verbessert wird.

Dabei kann die (finale) injizierte Wirkleistung an die Netzarchitektur bereitstellt werden, wobei diese von dem Wechselrichter in die Netzarchitektur (elektrisch) einspeist wird.

Damit ergeben sich in Bezug auf ein erfindungsgemäßes Netzsystem gemäß dem sechsten Aspekt die gleichen Vorteile, wie sie bereits in Bezug auf ein erfindungsgemäßes Verfahren gemäß dem ersten Aspekt und/oder einen erfindungsgemäßen Wechselrichter gemäß dem zweiten Aspekt und/oder ein erfindungsgemäßes Computerprogrammprodukt gemäß dem dritten Aspekt und/oder einen erfindungsgemäßen computerlesbaren Datenträger gemäß dem vierten Aspekt und/oder eine erfindungsgemäße Steuereinheit gemäß dem fünften Aspekt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine Steuereinheit, insbesondere einen Regelkreis 30
- Fig. 2: einen Energielieferanten, einen Wechselrichter und eine Netzarchitektur
- Fig. 3: ein Verfahren

In den nachfolgenden Figuren werden für die gleichen technischen Merkmale, auch von unterschiedlichen Ausführungsbeispielen, die identischen Bezugszeichen verwendet.

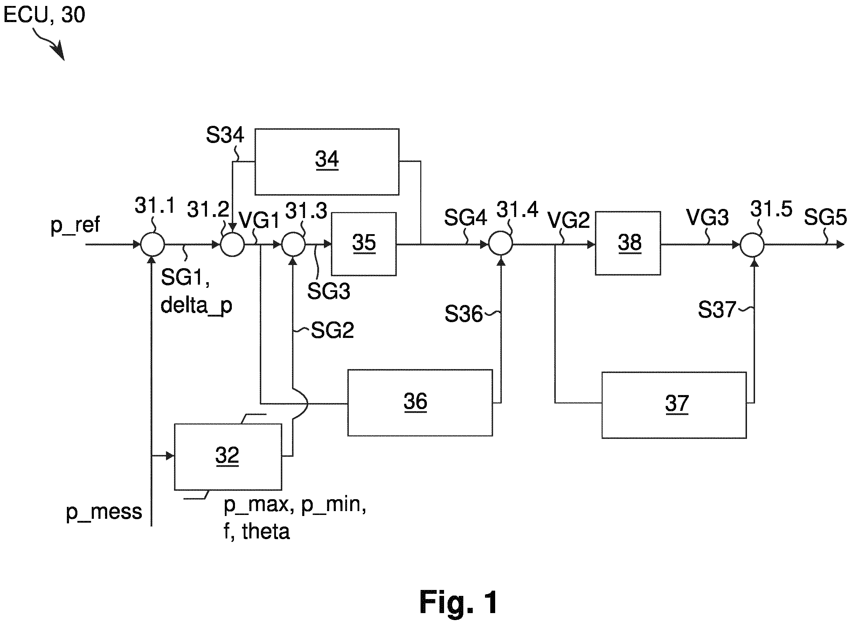

Figur 1 zeigt eine Steuereinheit ECU bzw. einen Regelkreis 30, welcher beispielsweise durch die Steuereinheit ECU implementiert werden kann. Die Steuereinheit ECU kann einen Messwert für eine injizierte Leistung p_mess und/oder einen Leistungssollwert p_ref empfangen. Dabei kann der Messwert für eine injizierte Leistung p_mess, insbesondere über ein erstes Verrechnungsglied 31.1, insbesondere einen Komparator, mit dem Leistungssollwert p_ref vergleichen, insbesondere durch Differenzbildung. Dadurch kann eine Leistungsdifferenz delta_p (von p_mess und p_ref) ermittelt werden. In Abhängigkeit von der Leistungsdifferenz delta_p kann eine erste Stellgröße SG1 ermittelt werden (wobei diese identisch sein können). Weiterhin kann der Messwert für eine injizierte Leistung p_mess, insbesondere von einem Begrenzer 32, mit zumindest einem Grenzwert, beispielsweise einem oberen Grenzwert für die injizierte Wirkleistung p_max, verglichen werden. Dadurch kann ein Ermitteln einer zweiten Stellgröße SG2 in Abhängigkeit von dem Messwert für eine injizierte Leistung p_mess und dem zumindest einen Grenzwert erfolgen. Anschließend kann ein Ermitteln einer dritten Stellgröße SG3 in Abhängigkeit von der ersten Stellgröße SG1, insbesondere einer ersten Verrechnungsgröße VG1 (welche durch ein zweites Verrechnungsglied 31.2 in Abhängigkeit von der ersten Stellgröße SG1 und einer ersten Kopplungsgröße S34 des ersten Kopplungspfads 34 bereitgestellt wird) und der zweiten Stellgröße SG2 durchgeführt werden. Vorzugsweise kann dabei die zweite Stellgröße SG2 auf die erste Stellgröße SG1, insbesondere die erste Verrechnungsgröße VG1, aufsummiert werden, um die dritte Stellgröße SG3 zu erhalten, beispielsweise durch ein drittes Verrechnungsglied 31.3. Das erste, zweite, dritte, vierte und/oder fünfte Verrechnungsglied 31.1, 31.2, 31.3, 31.4, 31.5 können dabei für eine Subtraktion und/oder Addition (Summieren, z. B. arithmetisches Summieren) eingerichtet sein. Die dritte Stellgröße SG3 kann in einen frequenzbildenden Integrator 35 (als Eingang/Input) geführt werden. Dieser kann in Abhängigkeit von der dritten Stellgröße SG3 eine vierte Stellgröße SG 4 ausgeben, welche vorzugsweise repräsentativ ist für eine Frequenz f, insbesondere einer Spannung und/oder eines Stroms, der injizierten Wirkleistung und/oder der inneren Spannungsquelle des Wechselrichters 100. Die vierte Stellgröße SG4 kann an einen phasenwinkelbildenden Integrator 38 bereitgestellt werden. Dabei kann die vierte Stellgröße SG4 (vorher) an ein viertes Verrechnungsglied 31.4 bereitgestellt werden, und insbesondere mit einer zweiten Kopplungsgröße S36 verrechnet werden, um vorzugsweise eine zweite Verrechnungsgröße VG2 zu erhalten, welche insbesondere an den phasenwinkelbildenden Integrator 38 bereitgestellt wird. Der phasenwinkelbildenden Integrator 38 kann in Abhängigkeit von der vierten Stellgröße SG4, insbesondere der zweiten Verrechnungsgröße VG2, eine fünfte Stellgröße SG5 ausgeben, welche insbesondere für ein Ansteuern 170, vorzugsweise ein Steuern und/oder Regeln des Wechselrichters 100, verwendet wird, vorteilhafterweise um die (finale) injizierte Wirkleistung zu begrenzen und/oder stabilisierend bzw. netzbildend einzuspeisen. Dabei kann die fünfte Stellgröße SG5 durch ein fünftes Verrechnungsglied 31.5 erhalten werden, welches vorzugsweise eine (von dem phasenwinkelbildenden Integrator 38 ausgegebene) dritte Verrechnungsgröße VG3 und eine dritte Kopplungsgröße S37 bereitgestellt bekommt. Vorzugsweise kann die dritte, vierte und/oder fünfte Stellgröße SG3, SG4, SG5 verwendet werden um eine (finale) injizierte Wirkleistung durch den Wechselrichter 100 auszugeben. Es kann vorgesehen sein, dass ein (erster) Kopplungspfad 34 vorgesehen ist, welcher eine, insbesondere parallele und/oder rückwärts gerichtete, Kopplung erlaubt, beispielsweise von einem Ausgang des frequenzbildenden Integrators 35 zu einer ersten Sollgröße SG1, insbesondere über ein Bereitstellen einer ersten Kopplungsgröße S34. Es kann vorgesehen sein, dass ein (zweiter) Kopplungspfad 36 vorgesehen ist, welcher eine, insbesondere parallele und/oder vorwärts gerichtete, Kopplung erlaubt, beispielsweise von einer ersten Stellgröße SG1 zu einer vierten Stellgröße SG4, insbesondere über ein Bereitstellen einer zweiten Kopplungsgröße S36. Es kann vorgesehen sein, dass ein (dritter) Kopplungspfad 37 vorgesehen ist, welcher eine, insbesondere parallele und/oder vorwärts gerichtete, Kopplung erlaubt, beispielsweise von einer vierten Stellgröße SG4 bzw. einem Eingang des phasenwinkelbildenden Integrators 37 zu einer fünften Stellgröße SG5, insbesondere über ein Bereitstellen einer dritten Kopplungsgröße S37.

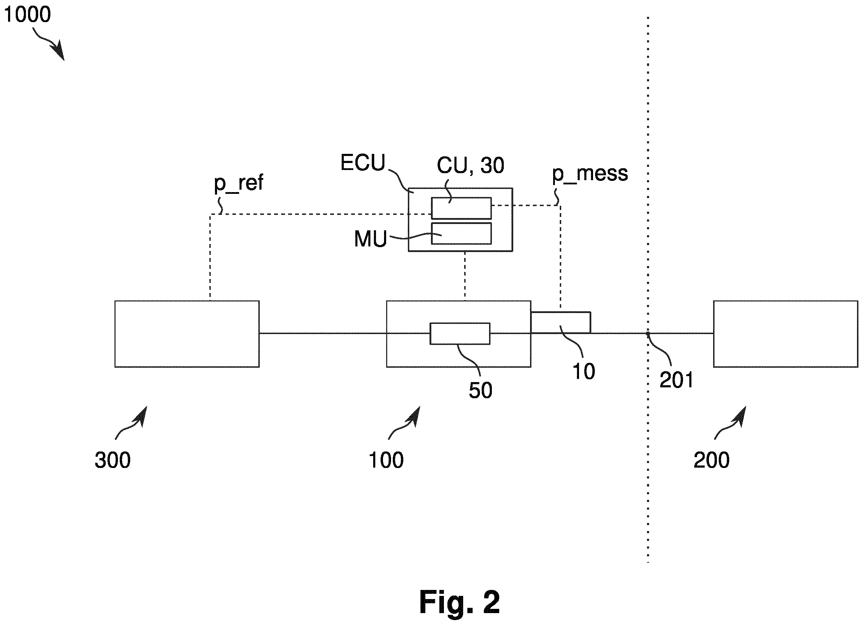

Figur 2 zeigt einen Energielieferanten 300, z. B. ein Windkraftwerk, welches mit einem Wechselrichter 100 (elektrisch) verbunden ist, um insbesondere eine Primärleistung von dem Energielieferanten 300 an den Wechselrichter 100 zu übertragen. Der Wechselrichter 100 umfasst dabei einen Wandler 50, welcher beispielsweise einen Gleichstrom / eine Gleichspannung des Energielieferanten 300 in einen Wechselstrom / eine Wechselspannung transformieren kann. Der Wechselrichter 100 ist mit einer Netzarchitektur 200 (elektrisch) verbunden, insbesondere über einen Netzanschlusspunkt 201. Demnach kann der Wechselrichter 100 eine injizierte Wirkleistung in die Netzarchitektur 200 einspeisen. Ein Sensor 10 des Wechselrichters 100 kann einen Messwert für die injizierte Wirkleistung p_mess ermitteln, welcher vorzugsweise (über eine Datenverbindung) an eine Steuereinheit ECU (insbesondere des Wechselrichters 100) übertragen werden kann. Die Steuereinheit ECU kann dabei eine Recheneinheit CU und eine Speichereinheit MU aufweisen. Die Steuereinheit ECU, insbesondere die Recheneinheit CU, kann dabei den Messwert für die injizierte Wirkleistung p_mess empfangen und/oder weiterverarbeiten, beispielsweise in einem Regelkreis 30. Die Steuereinheit ECU, insbesondere die Recheneinheit CU, kann dabei einen Leistungssollwert p_ref von dem Energielieferanten 300 empfangen und/oder weiterverarbeiten, beispielsweise in einem Regelkreis 30. Über eine Datenverbindung kann die Steuereinheit ECU (insbesondere die Recheneinheit CU) den Wechselrichter 100 (insbesondere den Transformator 50) ansteuern, und vorzugsweise dadurch einstellen.

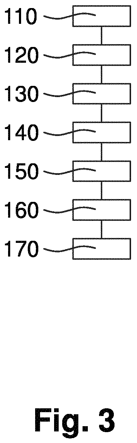

Figur 3 zeigt ein Verfahren zum Betreiben, insbesondere zum Steuern und/oder Regeln, eines Wechselrichters 100, welcher insbesondere mit einer Netzarchitektur 200 und einem Energielieferanten 300 eines Netzsystems 1000 verbindbar ist (z. B. gemäß Figur 2), aufweisend
- Messen 110, durch einen Sensor 10 von einem Messwert einer injizierten Wirkleistung p_mess, welche spezifisch ist für eine von dem Wechselrichter 100, insbesondere an die Netzarchitektur 200, injizierte Wirkleistung,
- Übertragen 120 des Messwerts der injizierten Wirkleistung p_mess von dem Sensor 10 an die Steuereinheit ECU,
- Empfangen 130, durch die Steuereinheit ECU, von einem Leistungssollwert p_ref, welcher insbesondere von dem Energielieferanten 300 an den Wechselrichter 100 vorgegeben wird,
- Ermitteln 140, durch die Steuereinheit ECU, einer ersten Stellgröße SG1 in Abhängigkeit von dem Messwert der injizierten Wirkleistung p_mess und dem Leistungssollwert p_ref, insbesondere zum Einstellen des Wechselrichters 100,
- Ermitteln 150, durch die Steuereinheit ECU, einer zweiten Stellgröße SG2 in Abhängigkeit von dem Messwert der injizierten Wirkleistung p_mess und zumindest eines Grenzwerts,
- Ermitteln 160, durch die Steuereinheit ECU, einer dritten Stellgröße SG3 in Abhängigkeit von der ersten Stellgröße SG1 und der zweiten Stellgröße SG2,
- Ansteuern 170, durch die Steuereinheit ECU, des Wechselrichters 100 in Abhängigkeit von der dritten Stellgröße SG3, insbesondere um in Abhängigkeit von der dritten Stellgröße SG3 eine finale injizierte Wirkleistung durch den Wechselrichter 100 auszugeben, wobei vorzugsweise eine Stabilität und/oder Gesamtleistung der Netzarchitektur 200 verbessert wird.

### Bezuaszeichenliste

- 10: Sensor
- 50: Wandler

- 30: Regelkreis
- 31.1: erstes Verrechnungsglied, insbesondere Komparator
- 31.2: zweites Verrechnungsglied
- 31.3: drittes Verrechnungsglied
- 31.4: viertes Verrechnungsglied
- 31.5: fünftes Verrechnungsglied
- 32: Begrenzer
- 34: (erster) Kopplungspfad (parallel, rückwärts)
- 35: frequenzbildender Integrator
- 36: (zweiter) Kopplungspfad (parallel, vorwärts)
- 37: (dritter) Kopplungspfad (parallel, vorwärts)
- 38: phasenwinkelbildender Integrator

- ECU: Steuereinheit
- CU: Recheneinheit
- MU: Speichereinheit

- 100: Wechselrichter
- 200: Netzarchitektur
- 201: Netzanschlusspunkt
- 300: Energielieferant
- 1000: Netzsystem

- 110: Messen durch einen Sensor
- 120: Übertragen des Messwerts
- 130: Empfangen eines Leistungssollwerts
- 140: Ermitteln einer ersten Stellgröße
- 150: Ermitteln einer zweiten Stellgröße
- 160: Ermitteln einer dritten Stellgröße
- 170: Ansteuern des Wechselrichters

- p_mess: Messwert einer injizierten Wirkleistung
- p_ref: Leistungssollwert
- delta_p: Leistungsdifferenz von p_mess und p_ref

- p_max: oberer Grenzwert für die injizierte Wirkleistung
- p_min: unterer Grenzwert für die injizierte Wirkleistung
- f: Frequenz der inneren Spannungsquelle des Wechselrichters (insbesondere virtuelle Rotorfrequenz)
- theta: Phasenwinkel der inneren Spannungsquelle des Wechselrichters (insbesondere virtueller Rotorwinkel)

- SG1: erste Stellgröße
- SG2: zweite Stellgröße
- SG3: dritte Stellgröße
- SG4: vierte Stellgröße
- SG5: fünfte Stellgröße

- VG1: erste Verrechnungsgröße
- VG2: zweite Verrechnungsgröße
- VG3: dritte Verrechnungsgröße

- S34: erste Kopplungsgröße
- S36: zweite Kopplungsgröße
- S37: dritte Kopplungsgröße

## Patentansprüche

1. Verfahren zum Betreiben, insbesondere zum Steuern und/oder Regeln, eines Wechselrichters (100), welcher insbesondere mit einer Netzarchitektur (200) und einem Energielieferanten (300) eines Netzsystems (1000) verbindbar ist, aufweisend
- Messen (110), durch einen Sensor (10) von einem Messwert einer injizierten Wirkleistung (p_mess), welche spezifisch ist für eine von dem Wechselrichter (100), insbesondere an die Netzarchitektur (200), injizierte Wirkleistung,
- Übertragen (120) des Messwerts der injizierten Wirkleistung (p_mess) von dem Sensor (10) an die Steuereinheit (ECU),
- Empfangen (130), durch die Steuereinheit (ECU), von einem Leistungssollwert (p_ref), welcher insbesondere von dem Energielieferanten (300) an den Wechselrichter (100) vorgegeben wird,
- Ermitteln (140), durch die Steuereinheit (ECU), einer ersten Stellgröße (SG1) in Abhängigkeit von dem Messwert der injizierten Wirkleistung (p_mess) und dem Leistungssollwert (p_ref), insbesondere zum Einstellen des Wechselrichters (100),
- Ermitteln (150), durch die Steuereinheit (ECU), einer zweiten Stellgröße (SG2) in Abhängigkeit von dem Messwert der injizierten Wirkleistung (p_mess) und zumindest eines Grenzwerts,
- Ermitteln (160), durch die Steuereinheit (ECU), einer dritten Stellgröße (SG3) in Abhängigkeit von der ersten Stellgröße (SG1) und der zweiten Stellgröße (SG2),
- Ansteuern (170), durch die Steuereinheit (ECU), des Wechselrichters (100) in Abhängigkeit von der dritten Stellgröße (SG3), insbesondere um in Abhängigkeit von der dritten Stellgröße (SG3) eine finale injizierte Wirkleistung durch den Wechselrichter (100) auszugeben, wobei vorzugsweise eine Stabilität und/oder Gesamtleistung der Netzarchitektur (200) verbessert wird.

2. Verfahren nach Anspruch 1,
**dadurch gekennzeichnet,**
**dass** Ermitteln (140), durch die Steuereinheit (ECU), einer ersten Stellgröße (SG1) in Abhängigkeit von dem Messwert der injizierten Wirkleistung (p_mess) und dem Leistungssollwert (p_ref), ein Berechnen einer Differenz zwischen dem Messwert der injizierten Wirkleistung (p_mess) und dem Leistungssollwert (p_ref) umfasst, um die erste Stellgröße (SG1) zu erhalten, wobei insbesondere die erste Stellgröße (SG1) eine Leistungsdifferenz (delta_p) aufweist.

3. Verfahren nach Anspruch 1 oder 2,
**dadurch gekennzeichnet,**
**dass** der zumindest eine Grenzwert spezifisch ist für den Wechselrichter (100), eine mit dem Wechselrichter (100) verbindbare Netzarchitektur (200), und/oder einen mit dem Wechselrichter (100) verbindbaren Energielieferanten (300).

4. Verfahren nach einem der vorhergehenden Ansprüche,
**dadurch gekennzeichnet,**
**dass** das Ermitteln (150), durch die Steuereinheit (ECU), einer zweiten Stellgröße (SG2) in Abhängigkeit von dem Messwert der injizierten Wirkleistung (p_mess) und zumindest eines Grenzwerts, insbesondere des Wechselrichters (100), ein Vergleichen des Messwerts der injizierten Wirkleistung (p_mess) und des zumindest einen Grenzwerts umfasst, wobei insbesondere der zumindest eine Grenzwert zumindest eines der folgenden Merkmale aufweist:
- ein unterer Grenzwert für die injizierte Wirkleistung (p_min), welcher insbesondere spezifisch ist für den Wechselrichter (100) und/oder einen mit dem Wechselrichter (100) verbundenen Energielieferant (300),
- ein oberer Grenzwert für die injizierte Wirkleistung (p_max), welcher insbesondere spezifisch ist für den Wechselrichter (100), eine mit dem Wechselrichter (100) verbundene Netzstruktur (200), und/oder einen mit dem Wechselrichter (100) verbundenen Energielieferanten (300).

5. Verfahren nach einem der vorhergehenden Ansprüche,
**dadurch gekennzeichnet,**
**dass** das Ermitteln (160), durch die Steuereinheit (ECU), einer dritten Stellgröße (SG3) in Abhängigkeit von der ersten Stellgröße (SG1) und der zweiten Stellgröße (SG2), ein Summieren, insbesondere ein arithmetisches Summieren, der ersten Stellgröße (SG1) und der zweiten Stellgröße (SG2) umfasst, um die dritte Stellgröße (SG3) zu erhalten.

6. Verfahren nach einem der vorhergehenden Ansprüche,
**dadurch gekennzeichnet,**
**dass** das Ansteuern (170), durch die Steuereinheit (ECU), des Wechselrichters (100) in Abhängigkeit von der dritten Stellgröße (SG3) zumindest eines der folgenden Merkmale aufweist:
- ein Bereitstellen der dritten Stellgröße (SG3) an einen frequenzbildenden Integrator (35), insbesondere um eine vierte Stellgröße (SG4) zu erhalten, welche vorzugsweise repräsentativ ist für eine Frequenz (f), insbesondere einer Spannung und/oder eines Stroms, der injizierten Wirkleistung,
- ein Bereitstellen der dritten Stellgröße (SG3), insbesondere der vierten Stellgröße (SG4), an einen phasenwinkelbildenden Integrator (38), insbesondere um eine fünfte Stellgröße (SG5) zu erhalten, welche vorzugsweise repräsentativ ist für einen Phasenwinkel (theta), insbesondere einer Spannung und/oder eines Stroms, einer inneren Spannungsquelle des Wechselrichters (100),
- Betreiben, insbesondere Steuern und/oder Regeln des Wechselrichters (100), durch die Steuereinheit (ECU), in Abhängigkeit von der dritten Stellgröße (SG3), vierten Stellgröße (SG4) und/oder fünften Stellgröße (SG5), wobei insbesondere in Abhängigkeit von der dritten Stellgröße (SG3), vierten Stellgröße (SG4) und/oder fünften Stellgröße (SG5) eine finale injizierte Wirkleistung durch den Wechselrichter (100) ausgegeben wird, wobei vorzugsweise die finale injizierte Wirkleistung zumindest eines der folgenden Merkmale aufweist
i. wobei die finale injizierte Wirkleistung, vorzugsweise dem Leistungssollwert (p_ref) entspricht,
ii. wobei die finale injizierte Wirkleistung, vorzugsweise größer oder gleich einem unteren Grenzwert für die injizierte Wirkleistung (p_min) ist, welcher insbesondere spezifisch ist für den Wechselrichter (100) und/oder einen mit dem Wechselrichter (100) verbundenen Energielieferant (300),
iii. wobei die finale injizierte Wirkleistung, vorzugsweise kleiner oder gleich einem oberen Grenzwert für die injizierte Wirkleistung (p_max) ist, welcher insbesondere spezifisch ist für den Wechselrichter (100), eine mit dem Wechselrichter (100) verbundene Netzstruktur (200), und/oder einen mit dem Wechselrichter (100) verbundenen Energielieferanten (300),
iv. wobei die die finale injizierte Wirkleistung dazu eingerichtet ist, ein unerwünschtes Schwingungsverhalten und/oder einen zumindest teilweisen Verlust einer Synchronität, insbesondere einer mit dem Wechselrichter (100) verbindbaren Netzarchitektur (200), zu verhindern.

7. Wechselrichter (100), insbesondere netzbildender Wechselrichter, welcher vorzugsweise mit einer Netzarchitektur (200) und einem Energielieferanten (300) eines Netzsystems (1000) verbindbar ist, aufweisend
- einen Wandler (50) zum Transformieren einer an den Wechselrichter (100), insbesondere von dem Energielieferanten (300), bereitgestellten Primärleistung in eine injizierte Wirkleistung, welche insbesondere von dem Wechselrichter (100) an eine Netzarchitektur (200) bereitgestellt wird,
- einen Sensor (10) zum Erfassen eines Messwerts der injizierten Wirkleistung (p_mess), welche spezifisch ist für die von dem Wechselrichter (100), insbesondere an die Netzarchitektur (200) bereitgestellte, injizierte Wirkleistung,
- eine Steuereinheit (ECU), welche das Verfahren nach einem der vorhergehenden Ansprüche implementiert.

8. Wechselrichter (100) nach dem vorhergehenden Anspruch,
wobei der Wechselrichter (100) für einen Parallelbetrieb mit zumindest einem weiteren Wechselrichter, und/oder für ein Nachbilden einer Schwingungsgleichung einer elektrischen Maschine eingerichtet ist.

9. Computerprogrammprodukt, umfassend Befehle, die bei der Ausführung des Computerprogrammprodukts durch einen Computer diesen veranlassen, das Verfahren nach einem der vorhergehenden Ansprüche zu implementieren.

10. Computerlesbarer Datenträger, in welchem Befehle hinterlegt sind, die bei der Ausführung durch einen Computer diesen veranlassen, das Verfahren nach einem der vorhergehenden Ansprüche durchzuführen.

11. Steuereinheit (ECU), aufweisend eine Recheneinheit (CU) und eine Speichereinheit (MU), in welcher Befehle hinterlegt sind, welche bei zumindest teilweiser Ausführung durch die Recheneinheit (CU) ein Verfahren nach einem der vorhergehenden Ansprüche durchführt.

12. Netzsystem (1000) aufweisend
- einen Wechselrichter (100) nach einem der vorhergehenden Ansprüche,
- eine Netzarchitektur (200), welche mit dem Wechselrichter (100) verbindbar ist, wobei beispielsweise die Netzarchitektur (200) ein Verteilnetz, ein Übertragungsnetz, und/oder einen ersten Energiespeicher aufweist,
- einen Energielieferanten (300) welcher mit dem Wechselrichter (100) verbindbar ist, und eine Primärleistung an den Wechselrichter (100) bereitstellt, wobei beispielsweise der Energielieferant (300) einen Energiegenerator und/oder einen zweiten Energiespeicher aufweist,
- wobei der Wechselrichter (100), insbesondere durch Implementieren des Verfahrens nach einem der vorhergehenden Ansprüche, eine injizierte Wirkleistung an die Netzarchitektur (200) bereitstellt, wobei vorzugsweise eine Stabilität und/oder Gesamtleistung der Netzarchitektur (200) verbessert wird.
